# EUROPEAN PATENT APPLICATION

(11) **EP 0 683 983 A1**
(43) Date of publication of application: **29.11.1995**
(21) Application number: 95303583.9
(22) Date of filing: 26.05.1995
(51) Int. Cl.: A22C 7/00

(54) **Tubular mold apparatus, method, and system**

(30) Priority: 26.05.1994 US 249562
(71) Applicant: W.R. GRACE & CO.-CONN., New York New York 10036-7794 (US)
(72) Inventor: Gray, Stephen L., Moore, South Carolina 29369 (US)
(74) Representative: Barlow, Roy James

(57) **Abstract**

An apparatus suitable for installing an end cap in a tubular mold (20), in which a casing (24) containing a food product (23) is disposed, before a cook-in process is begun, and removing the casing from the tubular mold after the cook-in process is completed, includes a cradle (12), the cradle capable of holding the tubular mold; means for applying pressure to the end cap in the mold, the means disposed at a first end of the cradle, and capable of holding the end cap in place at one end. of the casing before the cook-in process begins, and capable of forcing the casing containing the food product out of the mold after the cook-in process is completed; and a stop positioned at a second end of the cradle. A method of installing an end cap adjacent one end of a casing inside a tubular mold includes placing a casing, containing a food product, inside the mold, the mold open at one end; placing an end cap inside the mold, the end cap disposed adjacent one end of the casing inside the mold; placing the mold on a cradle; applying pneumatic or mechanical pressure against the end cap, to force the end cap against one end of the casing containing a food product; and installing a retaining device (28) through the mold, adjacent the end plate, while the end plate is being forced against the casing, such that the end plate is substantially held in place between the retaining device and the casing. A method of removing a casing from a mold, and a mold system, are also described.

## Description

### BACKGROUND OF THE INVENTION

The present invention relates generally to an apparatus, method, and system for cook-in use. More particularly, this invention relates to an apparatus and method for installing an end cap at one or both ends of a casing, filled with a food product, while the casing is in the mold; an apparatus and method for removing the casing from the mold; and a tubular mold system.

Many foods during preprocessing are stuffed into a casing and then placed in a heated medium, such as a hot water bath, for cook-in to produce a precooked, encased food product. Generally, a portion of a moldable raw meat, such as sectioned ham or meat emulsion, is pressed into a bag or casing lined stainless steel cooking mold having a generally rectangular shape, then cooked while in the mold, and thereafter packaged as a precooked compacted meat product. Alternatively, the moldable raw meat or emulsion can be pressed into the casing without the use of a mold and then cooked or after loading into a casing, the casing can be loaded into a mold for cooking. The term "cook-in" conventionally refers to cooking of a food product while contained in a package. Alternatively, the package may be a heat shrinkable bag which shrinks tightly about a contained food product upon initial exposure to cook-in conditions.

The term "cook-in package" is intended to refer to packaging material structurally capable of withstanding exposure to cook-in-time-temperature conditions while containing a food product. Cook-in-time-temperature conditions typically imply a long slow cook, for example by submersion in water at 70-80 degrees Celsius for 4-6 hours. Under such conditions, a packaging material properly characterized as cook-in will maintain heat seal integrity and will be delamination resistant. The packaging material typically will also be heat shrinkable under these conditions so as to form a neatly fitted package and preferably should have a tendency toward product adhesion to minimize "cook-out" or collection of fluids between the surface of the food product and the interior surface of the casing.

It is desirable that a cook-in package closely conform to the contained food product to prevent "cook-out", i.e., exudation of fluids from the food product during cooking. By restricting exudation of fluids from a cook-in contained food product, the yield of the precooked food product is increased, since fluid retention tends to increase product weight. It is also desirable that the cook-in contained food product maintain uniform size over its full length, and optionally have flattened ends, so as to produce uniform size (cross-sectional area) and weight portions when further processed, thereby further increasing the yield. It is further desirable to produce such a cook-in contained food product utilizing inexpensive apparatus which may be used with existing cook-in processing equipment.

Copending patent application USSN 940,597, assigned to a common assignee with the present invention, discloses the use of a polymeric cook-in mold, made for example from plastic, which provides a very uniform diameter of the cased meat product and, with the use of end plates and a pressure plate, also provides flattened casing ends. This is beneficial in leading to more uniform slices of the cased product and increased yield after cooking. In practice, plastic end caps are placed on either end of the molded product to insure square (i.e. flat) ends. These caps are held in place by stainless wire retaining clips. It is sometimes difficult to apply pressure to install the end caps, and insert the clips, at the same time. Also, the cooked product typically stays firmly in place in the plastic mold after the retaining clips are removed, after the cook-in process is completed. It is desirable to provide a means to assist in removal of the cooked product from the polymeric cook-in mold.

### SUMMARY OF THE INVENTION

An apparatus suitable for installing an end cap in a tubular mold, in which a casing containing a food product is disposed, before a cook-in process is begun, and removing the casing from the tubular mold after the cook-in process is completed, comprises a cradle, the cradle capable of holding the tubular mold; means for applying pressure to the end cap in the mold, the means disposed at a first end of the cradle, and capable of holding the end cap in place at one end of the casing before the cook-in process begins, and capable of forcing the casing containing the food product out of the mold after the cook-in process is completed; and a stop positioned at a second end of the cradle.

A method of installing an end cap adjacent one end of a casing inside a tubular mold, comprises placing a casing, containing a food product, inside the mold, the mold open at one end; placing the end cap inside the mold, the end cap disposed adjacent one end of the casing inside the mold; placing the mold on a cradle; applying pneumatic or mechanical pressure against the end cap, to force the end cap against one end of the casing containing a food product; and installing a retaining device through the mold, adjacent the end plate, while the end plate is being forced against the casing, such that the end plate is substantially held in place between the retaining device and the casing.

A method of installing end caps adjacent first and second ends of a casing inside a tubular mold comprises placing a first end cap inside the mold; installing a first retaining device through the mold, adjacent the end plate; placing the casing, containing a food product, inside the mold; placing the mold on a cradle; placing a second end cap adjacent the second end of the casing inside the mold; applying pneumatic or mechanical pressure against the second end cap, to force the end cap against the second end of the casing; and installing a second retaining device through the mold, adjacent the second end plate, while the second end plate is being forced against the casing, such that the end plates are substantially held in place between the respective retaining devices and the casing.

A method of removing a casing from a tubular mold, the mold open at a first end and having an apertured wall at a second end, and having a casing containing a cooked food product therein inside the mold, comprises placing the mold on a cradle; removing a retaining device from the mold; and applying pneumatic or mechanical pressure through the apertured wall, and against the casing, to force the casing from the mold.

A method of removing a casing from a mold, the mold open at a first end and a second end, and having a casing containing a cooked food product therein inside the mold, comprises placing the mold on a cradle; removing retaining devices from the mold; and applying pneumatic or mechanical pressure against the casing, to force the casing from the mold.

A mold system comprises a hollow tubular body having a first end and a second end; a cook-in casing containing a food product, the casing disposed inside the tubular body, the casing having a first end and a second end; a first end plate disposed adjacent the first end of the casing; a second end plate disposed adjacent the second end of the casing; a first retaining device disposed adjacent the first end plate, and opposite the first end of the casing; and a second retaining device disposed adjacent the second end plate, and opposite the second end of the casing.

A mold system comprises a hollow tubular body having a first end and a second end; a casing containing a food product, the casing disposed inside the interior of the tubular body, the casing having a first end and a second end; a first end plate disposed at the first end of the hollow tubular body, and adjacent the first end of the casing; a second end plate disposed adjacent the second end of the casing; and a retaining device disposed adjacent the second end plate, and opposite the second end of the casing.

This system can be used to assist in installing one or more end plates before the cook-in process, and extracting molded product after cook-in. The air cylinder indirectly (mechanical) or directly (pneumatic) applies force for capping, and the air is then used for product removal after cook-in.

### BRIEF DESCRIPTION OF THE DRAWINGS

Fig. 1 shows a plan schematic view of the apparatus of the invention;
Fig. 2 shows a side schematic view of the apparatus of Fig. 1 with a casing and packaged meat product therein;
Fig. 3 shows a side view of a mold system in accordance with the present invention;
Fig. 4 shows a side view of a mold system in accordance with the invention;
Fig. 5 shows a front view of a mold system in accordance with the invention; and

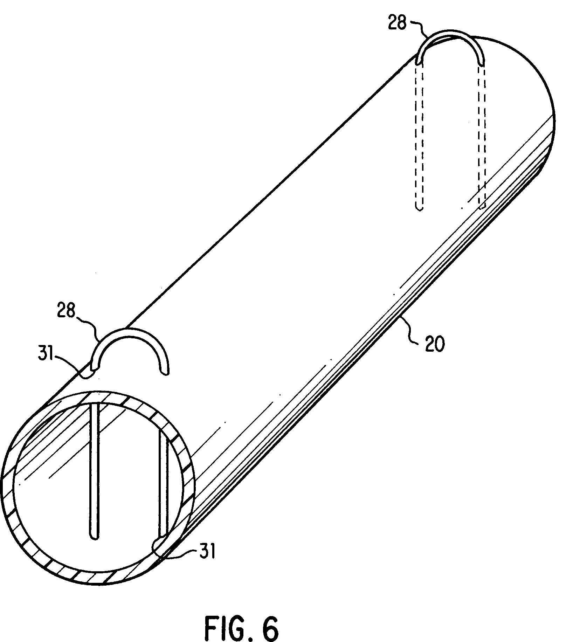

Fig. 6 shows a perspective view of a mold system in accordance with the invention.

### DESCRIPTION OF THE PREFERRED EMBODIMENTS OF THE INVENTION

The present invention will be better understood from the specification taken in conjunction with the accompanying drawings in which like reference numerals refer to like parts.

Copending USSN 940,597 shows a method of cooking a moldable meat product, including the steps of: loading a moldable meat product into a stuffing horn of a meat stuffer; placing a heat shrinkable, thermoplastic cook-in bag or casing onto the horn, the length of the bag or casing being greater than the length of a cook-in mold, into which the bag or casing will later be introduced, to define a bag or casing neck portion; advancing the meat from the horn to fill the thermoplastic cook-in bag or casing; substantially removing meat from within the bag or casing neck portion; retracting the bag or casing from the horn and closing the bag or casing neck portion by gathering and clipping, forming a closed neck end; and introducing the filled, neck clipped bag or casing into a cook-in mold; cooking the bagged or cased meat product within said cook-in mold in a hot water bath or high humidity oven means using desired temperatures and cooking times for the meat; the improvement comprising a cook-in mold comprised of: a rigid to semi-rigid polymeric cook-in mold body having a first end and a second end, and having a means for securing an end plate on each end of the cook-in mold body; an end plate secured by a securing means on each end of the cook-mold body, each end plate having a hole therein to allow for the thermoplastic bag or casing ends to protrude outside of the cook-in mold body, the thermoplastic bag or casing clipped ends protruding during cooking to allow for flattened ends.

USSN 940,597 is incorporated herein by reference in its entirely. The above-described method has proved to be very useful in packaging meat products and creating cook-in casings filled with such meat products which exhibit uniform size, especially uniform width over the length of the casing and flattened ends which increase the product yield for the customer of the cook-in casing.

In implementing this method, it would be advantageous to have an apparatus and process which allows an end plate to be conveniently installed on or inside the cook-in mold, against an end of the filled cook-in casing. It would also be advantageous to have an apparatus or process which easily removes the cook-in casing, after the cook-in process, from the cook-in mold.

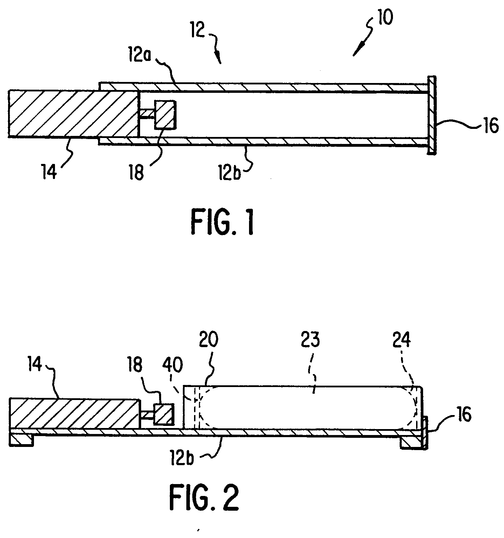

Referring to Fig. 1, the apparatus of the invention includes a cradle 12 which preferably comprises a pair of rails 12a and 12b, generally parallel and spaced apart from each other, for holding a tubular mold. The term "tubular" is used herein to mean a mold comprising a length of a polymeric material which is continuous in nature, and has a hollow core within which a meat filled casing can be placed. It is preferably generally cylindrical in shape, although cross-sectional shapes other than round shapes are possible and useful in the present invention, including oblong, D-shaped, quadrilateral, etc. The cradle 12 can be a continuous trough-like member made of any suitable material, including metal or polymer.

A means for applying pressure 14 is installed at one end of the cradle, and is preferably a pneumatic cylinder such as an air cylinder, or a hydraulic cylinder. A stop 16 located at an opposite end of the cradle 12 from the means 14 holds a cook-in mold in place during the operation of the invention. The stop is preferably a boss or protrusion of any suitable shape and size, made preferably of a metal or plastic.

When using the present invention to apply pressure to an end plate at one end of a cook-in casing inside the cook-in mold, a piston 18 of any suitable shape and width can be used. When removing a cook-in casing from the mold, after the cooking process, the air cylinder can be suitably modified to blow a stream of air at high pressure against one end of the cook-in casing, and the end plate disposed at one end of the casing, to push the cook-in casing from the mold. The air or hydraulic cylinder can alternatively be used to apply mechanical pressure to the end plate and, thereby, to the filled casing.

In Fig. 2, a side view of Fig. 1 is shown. A cook-in casing 24 is shown, filled with a food product 23 such as meat. The meat filled casing 24 is shown inside a mold 20, for example, of the type shown in U.S. Serial No. 940,597.

An end plate 26 is shown at each end of the filled casing 24, inside mold 20.

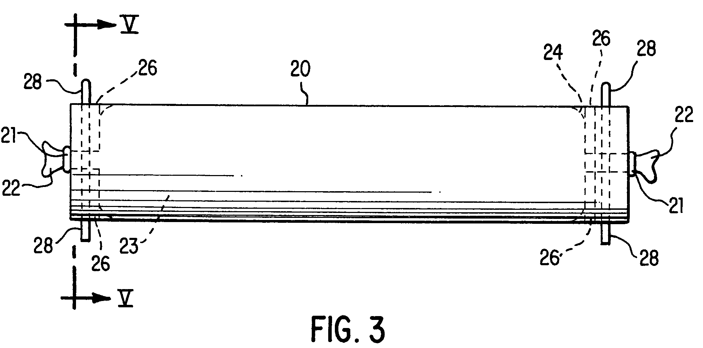

Referring to Fig. 3, a mold 20 containing a cook-in casing 24 is shown in more detail, with end plates 26 at either end of the casing, and retaining device 28 shown adjacent the end plates 26 at each respective end of the casing. As shown in Fig. 3, the end plate at the right end of the casing is shown as slightly spaced apart from its respective retaining device 28. This is done for clarity, but in operation the end plate will typically be pressed against the retaining device after installing the devices, during cook-in, and before removal of the devices prior to removing the cook-in casing from the mold.

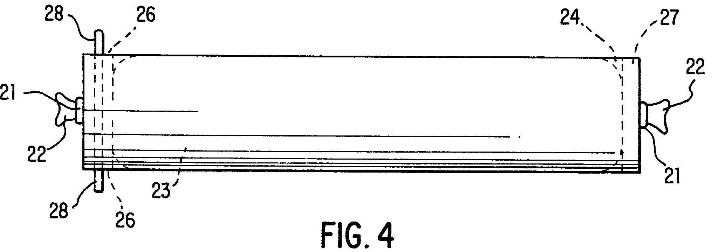

Fig. 3 shows two end plates and two respective retaining devices. In an alternative embodiment, in Fig. 4, one end of the mold is closed by what in effect operates as a permanent welded end plate 27, so that only one end plate and one retaining device are required for practice of the invention.

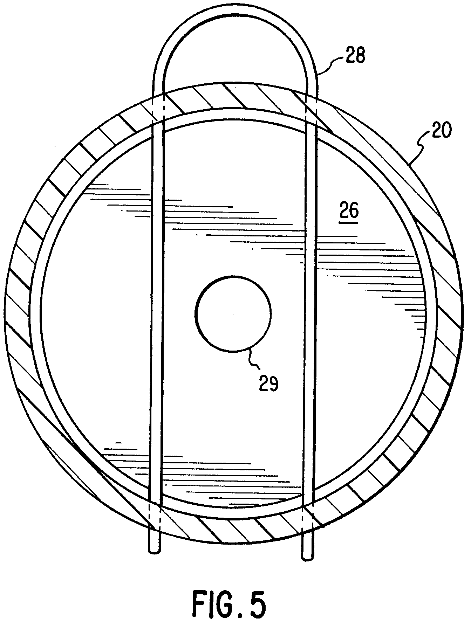

Fig. 5 shows a front view of a cook-in mold, within which an end plate has been placed, and a retaining device has been installed to hold the end plate in place against one end of the filled cook-in casing. Fig. 5 can be regarded as a view taken along line V-V of Fig. 3, but with the casing material not shown for clarity. An optional hole 29 in the center part of end plate 26 prevents the casing ends and clips from being embedded in the ends of the cooked meat product and helps to increase usable product yield. The hole 29 allows for the casing neck 22 to be pulled through and clipped with clip 21 by means well known in the art. The end plate 26 is shown as having a slightly smaller diameter than the inside diameter of the tubular mold. It is desirable to have the end plate large enough to flatten the end of the casing, and operate with the other components of the mold system and apparatus, but small enough to be conveniently installed in and removed from the mold.

In operation, in a preferred embodiment, a tubular mold 20 suitable for cook-in applications is prepared by placing an end plate inside the mold, and towards one end of the mold, and a retaining device 28 is installed through the mold by means of holes 31 in the mold. The retaining devices 28 are preferably of a U-shaped configuration, although a single, linear rod or pin, or other suitable retaining configuration can be used as long as it holds the end plate during the cook-in process. The retaining devices 28 may be made of any suitable material, preferably stainless steel or plastic. The end plates 3 of the present invention may be made of any suitable material. Suitable materials include stainless steel, PVC, acetyl resins such as, for example, DELRIN(R) brand acetyl resin, polypropylene, polyethylene and copolymers thereof. A casing 24 is filled with a meat product 23 by means well known in the art, and placed inside the mold. The end of the casing is brought through the hole 29 of another end plate 26, and the end plate is then drawn up, inside the mold, against the end of the meat filled casing. A second retaining device 28 is then installed adjacent the second end plate, to insure that the meat filled casing 24 has flattened ends, and does not shift appreciably during the cook-in process. In order to make the installation of the second device easier, pressure is applied from the pneumatic or other means to press the end plate 26 against the end of the filled casing 24. While this pressure is being applied, the retaining device 28 is installed. The pressure is then removed, and the casing filled mold is ready for a conventional cook-in process.

After the cook-in process has been completed, the casing filled mold is then installed again on the apparatus, the retaining devices 28 are removed, and pressure such as pneumatic pressure is applied to one end of the interior of the mold, against an end plate 26, to force the meat filled casing 24 out of the mold at the opposite end.

In the case of the mold shown in Fig. 4, the pneumatic pressure is applied through a hole 29 at the "permanent" end plate end of the casing, after the retaining device 28 has been removed from the opposite end of the mold, to force the cooked, meat filled casing 24 from mold 20.

The polymeric cook-in mold 1 may be made from any semi-rigid to rigid polymeric material which maintains its shape and dimensions under the temperature and pressure conditions encountered during the cook-in process and subsequent storage. Such conditions are well known and understood in the art. Suitable polymeric materials include, for example, polyolefins such as, polyvinyl chloride, polyethylene, polypropylene, copolymers thereof, as well as cast acrylic, and the like. The mold profile can be of any desired shape and is not restricted to the rectangular shape of stainless steel molds. The molds of the present invention may be of any desired length. For example lengths of 15 inches to 6 feet are easily provided.

Any of the well known "cook-in package" meat casing materials may be used with the present invention. Thus, a packaging material structurally capable of withstanding exposure to cook-in time-temperature conditions while containing a food product is suitable. The use of shrinkable casing material is especially well suited for use with the present invention. A particularly preferred packaging material is thermoplastic bi-axially oriented polyolefin film. The casings may be in the form of individual bags, sticks of shirred casings or continuous casing tubing. Further, the casings may be clipped on both ends and the individual bags may have one heat sealed end or one end closed by any other known means.

The present invention may be used with any suitable casing stuffing or sizing machine. Examples of suitable stuffing, sizing, and vacuum packaging machinery include, for example, the ROBOT 3000 DC available from Robert Reiser & Co., Inc. and Handtmann VF 20 available from TW Kutter, Inc., the RS 4201 available from Tipper Tie, the Shirmatic 400 and 600 series available from Viskase and the Mepaco stuffing system and the Cryovac(R) 8490/8150 vacuuming packaging system. These machines are well known in the art and need no further discussion here.

The following examples are illustrative of the present invention but should not be construed as limiting the invention in any way.

### EXAMPLE 1

Thin sliced chicken and turkey breast, and cured turkey breast, were processed in a tubular mold of the present cook-in system. The molds were capped at one end with a Delrin (tm) end plate, and a U-shaped stainless steel retaining pin. A Teepak T-sizer ran CN 580 casing material. The casing material was a heat shrinkable thermoplastic casing (commercially available from Cryovac Div., W.R. Grace & Co.-Conn.) having a lay flat width of 6 1/4''. Each casing was stuffed to a diameter of 4 1/4''. The filled casings were clipped at both ends with a metal clip, in a conventional manner. The filled casings had a length of 35 1/2'' clip-to-clip. The length of the final filled casings was between 29'' and 29 1/2''. The casings were overstuffed to put more pressure in the end caps, to produce flat ends.

After stuffing, each tubular mold, containing a filled casing, was placed in the cradle of the apparatus of the present invention. A second Delrin (tm) end cap was placed in the open end of the mold, and an air activated piston was indexed forward to put pressure on the end cap until it could be held in place by inserting a U-shaped retaining device perpendicularly through the mold and perpendicular and adjacent to the end plate.

The filled and capped molds were then loaded into a metal tank for water cooking at 180 degrees F to an internal meat product temperature of 160 degrees F. The cooking time was about four hours.

Ten molds were also made with an end plate pre-welded to one end of each of the ten molds. A hole in the middle of the welded end plate accommodated a metal casing clip of a filled casing. These additional molds were also filled with a filled casing, and were easier to handle because of the welded end plate.

A total of 120 molds were filled and processed as just desribed.

After the cook-in process was completed, half of the 120 molds were immediately "demolded", i.e. the filled casings were removed from the molds. Of these, a large portion resulted in clips blown off the ends of the filled casing.

The other half of the molds were demolded after a chilling step, using the same procedure. This had good results. The filled casings had flattened ends.

Two methods of demolding were used. Molds with a welded end plate were fitted with a small round gasket over the center hole of the welded end plate. Each mold was placed in the cradle, and air pressure was applied through the hole. Molds with two end plates and two retaining rings were processed differently. For these, a round Delrin block fitted with two O-rings was indexed forward from a air cylinder. The block and O-rings fit the inside diameter of the mold. Once inside the mold, air was forced through the block to push the filled casing out of the mold.

Two additional runs were made, but with a diameter of 4.40'' and a length of between 33 1/2'' and 34''. Cook-in was done as described above, and demolding was done both immmediately after cook-in, and after chilling. The hot demolded product showed acceptable casings in 98.3% of the casings tested. Flatness was also acceptable.

### EXAMPLE 2

About 50 tubular molds were filled and processed general ly as described for Example 1. The casing material was a 6 1/4'' layflat CN 580. Before cook-in, some of the molds were capped by adding a 1/4'' wide metal nose or band to the middle of the Delrin plunger used to put pressure on the end plate of the mold.

### EXAMPLE 3

A stainless steel stuffing horn with a D-shaped Delrin (tm) tip was mated to a Handtmann stuffer. A casing was pulled up over the stuffing horn, a tubular mold of the type described herein, and having one end plate already welded to one end of the mold, was placed over the casing, and the casing-lined mold was stuffed horizontally with a turkey product. The end plate had a 1/2'' diameter hole in the center, for air demolding after cook-in. The mold was 33 1/2'' in length. The filled casing was 30 1/2'' long. The top of the casing was then folded for a heat tack seal. The casing material was a heat shrinkable thermoplastic casing (commercially available from Cryovac Div., W.R. Grace & Co.-Conn. under the tradename CN510) having a lay flat width of 8 3/4'' and a length of 37''. An end plate was then placed on top of the casing fold, and the tubular mold was placed in the cradle of the apparatus of the present invention. A pressure mechanism was then used to press the end plate against one end of the filled casing, and a U-shaped retaining device was inserted perpendicularly through the mold and perpendicular and adjacent to the end plate.

The filled casing was then cooked while in the mold.

After the cook-in process was completed, the cooked turkey product in the casing inside of the mold was then placed again in the cradle. Compressed air was delivered from an air fitment of a pneumatic device to blow the filled casing from the mold. The resulting filled casing exhibited low variation in cross-sectional diameter, and flattened ends.

Although the illustrative embodiments of the present invention have been described herein with reference to the examples and to the accompanying drawings it is to be understood that the invention is not limited to those precise embodiments, and that various other changes and modifications may be effected therein by one skilled in the art without departing from the scope or spirit of the invention.

## Claims

1. An apparatus suitable for installing an end cap in a tubular mold, in which a casing containing a food product is disposed, before a cook-in process is begun, and removing the casing from the tubular mold after the cook-in process is completed, comprising:
a) a cradle, the cradle capable of holding the tubular mold;
b) means for applying pressure to the end cap in the mold, the means disposed at a first end of the cradle, and capable of holding the end cap in place at one end of the casing before the cook-in process begins, and capable of forcing the casing containing the food product out of the mold after the cook-in process is completed; and
c) a stop positioned at a second end of the cradle.

2. The apparatus of claim 1 wherein the cradle comprises a pair of parallel, spaced apart rails having a first end and a second end.

3. The apparatus of claim 1 wherein the means for applying pressure to the end cap in the mold comprises a pneumatic cylinder.

4. The apparatus of claim 1 wherein the means for applying pressure to the end cap in the mold comprises a pneumatic cylinder with a piston for pushing the end plate against the casing containing a food product, thereby allowing a retaining device to be installed adjacent the end plate.

5. The apparatus of claim 1 wherein the means for applying pressure to the end cap in the mold comprises a pneumatic cylinder with a means for forcing the casing out of the mold.

6. A method of installing an end cap adjacent one end of a casing inside a tubular mold, comprising:
a) placing a casing, containing a food product, inside the mold, the mold open at one end;
b) placing the end cap inside the mold, the end cap disposed adjacent one end of the casing inside the mold;
c) placing the mold on a cradle;
d) applying pneumatic or mechanical pressure against the end cap, to force the end cap against one end of the casing containing a food product; and
e) installing a retaining device through the mold, adjacent the end plate, while the end plate is being forced against the casing, such that the end plate is substantially held in place between the retaining device and the casing.

7. A method of installing end caps adjacent first and second ends of a casing inside a tubular mold comprising:
a) placing a first end cap inside the mold;
b) installing a first retaining device through the mold, adjacent the end plate;
c) placing the casing, containing a food product, inside the mold;
d) placing the mold on a cradle;
e) placing a second end cap adjacent the second end of the casing inside the mold;
f) applying pneumatic or mechanical pressure against the second end cap, to force the end cap against the second end of the casing; and
g) installing a second retaining device through the mold, adjacent the second end plate, while the second end plate is being forced against the casing, such that the end plates are substantially held in place between the respective retaining devices and the casing.

8. A method of removing a casing from a tubular mold, the mold open at a first end and having an apertured wall at a second end, and having a casing containing a cooked food product therein inside the mold, the method comprising:
a) placing the mold on a cradle;
b) removing a retaining device from the mold; and
c) applying pneumatic or mechanical pressure through the apertured wall, and against the casing, to force the casing from the mold.

9. A method of removing a casing from a mold, the mold open at a first end and a second end, and having a casing containing a cooked food product therein inside the mold, the method comprising:
a) placing the mold on a cradle;
b) removing retaining devices from the mold; and
c) applying pneumatic or mechanical pressure against the casing, to force the casing from the mold.

10. A mold system comprising:
a) a hollow tubular body having a first end and a second end;
b) a cook-in casing containing a food product, the casing disposed inside the tubular body, the casing having a first end and a second end;
c) a first end plate disposed adjacent the first end of the casing;
d) a second end plate disposed adjacent the second end of the casing;
e) a first retaining device disposed adjacent the first end plate, and opposite the first end of the casing; and
f) a second retaining device disposed adjacent the second end plate, and opposite the second end of the casing.

11. A mold system comprising:
a) a hollow tubular body having a first end and a second end;
b) a casing containing a food product, the casing disposed inside the interior of the tubular body, the casing having a first end and a second end;
c) a first end plate disposed at the first end of the hollow tubular body, and adjacent the first end of the casing;
d) a second end plate disposed adjacent the second end of the casing; and
e) a retaining device disposed adjacent the second end plate, and opposite the second end of the casing.
